# EUROPÄISCHE PATENTSCHRIFT

(11) **EP 3 619 804 B1**
(45) Veröffentlichungstag und Bekanntmachung des Hinweises auf die Patenterteilung: **06.04.2022**
(21) Anmeldenummer: 18720238.7
(22) Anmeldetag: 25.04.2018
(51) Int. Cl.: H02M 7/5387, H02M 1/32, B60L 3/00, B60L 15/06, B60L 15/08, B60L 50/60, H02M 7/219, H02P 6/15

(54) **VERFAHREN ZUR ANSTEUERUNG EINES STROMRICHTERS, STEUERVORRICHTUNG FÜR EINEN STROMRICHTER UND STROMRICHTER**
METHOD FOR CONTROLLING A RECTIFIER, CONTROL DEVICE FOR A RECTIFIER AND RECTIFIER
PROCÉDÉ DE COMMANDE D'UN CONVERTISSEUR DE COURANT, DISPOSITIF DE COMMANDE POUR UN CONVERTISSEUR DE COURANT ET CONVERTISSEUR DE COURANT

(30) Priorität: 02.05.2017 DE 102017207297
(43) Veröffentlichungstag der Anmeldung: 11.03.2020
(73) Patentinhaber: Robert Bosch GmbH, 70442 Stuttgart (DE)
(72) Erfinder: MERKEL, Tino, 71701 Schwieberdingen (DE); MALCHOW, Florian, 70176 Stuttgart (DE); HIRSCH, Michele, 73730 Esslingen (DE)
(86) Internationale Anmeldenummer: PCT/EP2018/060606
(87) Internationale Veröffentlichungsnummer: WO 2018/202510

(56) Entgegenhaltungen:
- EP-A1- 2 833 529
- EP-A1- 2 940 853
- US-A1- 2015 016 170
- US-A1- 2016 373 047

## Beschreibung

Die vorliegende Erfindung betrifft ein Verfahren zur Ansteuerung eines Stromrichters, eine Steuervorrichtung für einen Stromrichter und einen Stromrichter. Insbesondere betrifft die vorliegende Erfindung die Ansteuerung eines Stromrichters zur Optimierung einer Temperaturverteilung in dem Stromrichter.

### Stand der Technik

Die Druckschrift DE 10 2007 018 829 A1 offenbart ein Verfahren und eine Vorrichtung zur Ansteuerung einer Leistungsschaltereinheit. Zum Schutz der Leistungsschaltereinheit gegen thermische Überbelastung wird eine Temperaturrichtgröße der Leistungsschaltereinheit erhoben, anhand des zeitlichen Verlaufs der Temperaturrichtgröße wird ein Temperaturhub während einer Betriebsphase der Leistungsschaltereinheit bestimmt und anschließend die Verlustleistung der Leistungsschaltereinheit derart limitiert, dass der Temperaturhub einen vorgegebenen Grenzwert nicht überschreitet.

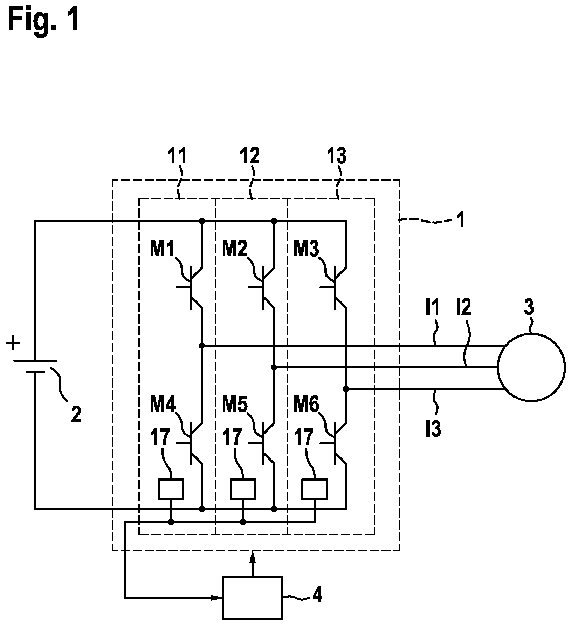

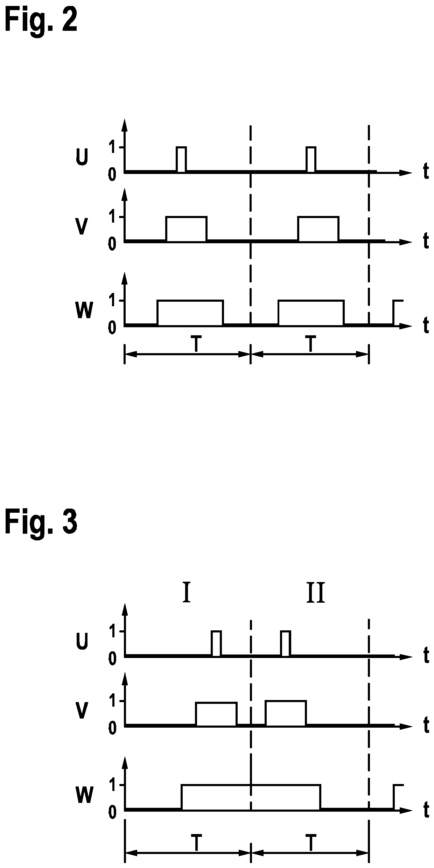

Die Druckschrift EP 2 940 853 A1 offenbart, in den Figuren 2 und 23, einen Leistungswandler mit einem Wechselrichter, der dazu eingerichtet ist, eine Spannung an eine Last abzugeben, und mit einem Regler, der dazu eingerichtet ist, dem Wechselrichter ein PWM-Signal vorzugeben, welches in Abhängigkeit einer gemessenen Temperatur erzeugt wird Wenn die detektierte Temperatur oberhalb eines bestimmten Schwellwert liegt, werden die PWM-Einschaltpulsen zweier aufeindanderfolgenden PWM-Takten wie gezeigt in Figur 1C dieses Druckschrifts zusammengefügt.

Die Druckschrift US 2015/ 0016 170 A1 offenbart ein Verfahren zur Ansteuerung eines mehrphasigen Stromrichters, worin die PWM-Einschaltpulsen zweier aufeinanderfolgenden PWM-Takten wie gezeigt in Figur 10 dieses Druckschrifts zusammengenommen werden.

In elektrischen Antriebssystemen wird in der Regel eine elektrische Maschine von einem vorgeschalteten Stromrichter mit elektrischer Energie gespeist.

Derartige Stromrichter umfassen mehrere Halbleiterschaltelemente mittels derer ein elektrischer Strom und/oder eine elektrische Spannung für die angeschlossene elektrische Maschine eingestellt werden kann. Hierbei werden die Schaltelemente beispielsweise mittels eines Pulsbreitenmodulationsverfahrens angesteuert. Übliche Modulationsverfahren sind beispielsweise Raumzeiger-Modulation, Sinusmodulation, Fiat-Top oder Flat-Bottom. In der Regel werden dabei in einem Normalbetrieb alle Schaltelemente gleichmäßig angesteuert. Während des Betriebs ist dabei darauf zu achten, dass vorgegebene Grenzwerte für die Belastung der Schaltelemente, wie zum Beispiel eine maximale Temperatur oder ähnliches nicht überschritten werden.

### Offenbarung der Erfindung

Die vorliegende Erfindung schafft ein Verfahren zur Steuerung eines Stromrichters mit den Merkmalen des Patentanspruchs 1, eine Steuervorrichtung für einen pulsbreitenmodulierten Stromrichter mit den Merkmalen des Patentanspruchs 6 und einen elektrischen Stromrichter mit den Merkmalen des Patentanspruchs 7.

### Vorteile der Erfindung

Der vorliegenden Erfindung liegt die Erkenntnis zugrunde, dass Schaltvorgänge der Schaltelemente in einem Stromrichter mit Schaltverlusten verbunden sind.

Diese Schaltverluste können zu einer Erwärmung der Schaltelemente und somit des gesamten Stromrichters führen. Nähert sich aufgrund dieser Erwärmung die Temperatur in dem Stromrichter und insbesondere an den Schaltelementen des Stromrichters einer maximalen Betriebstemperatur an, oder wird diese maximale Betriebstemperatur überschritten, so muss die Leistung des Stromrichters herabgesetzt werden. Andernfalls könnte ein weiterer Temperaturanstieg zu einer vorzeitigen Alterung oder gegebenenfalls sogar zu einer Beschädigung der Bauelemente, insbesondere der Schaltelemente in dem Stromrichter führen. Der vorliegenden Erfindung liegt daher die Idee zugrunde, dieser Erkenntnis Rechnung zu tragen und die Schaltverluste, sowie die damit verbundene Erwärmung des Stromrichters zu verringern. Hierzu ist es vorgesehen, die Schaltelemente eines Stromrichters mit einem Schaltmuster anzusteuern, welches die Schaltverluste verringert. Insbesondere ist es vorgesehen, die Einschaltzeitpunkte und die Ausschaltzeitpunkte einer pulsbreitenmodulierten Ansteuerung derart anzupassen, dass in einer ersten elektrischen Phase eines mehrphasigen Stromrichters die Anzahl der Schaltvorgänge verringert werden kann.

Für eine solche Verringerung der Schaltvorgänge in einer ersten elektrischen Phase eines mehrphasigen Stromrichters wird vorgesehen, für die erste Phase in zwei aufeinanderfolgenden Taktzyklen der pulsbreitenmodulierten Ansteuerung die Einschaltzeitdauern miteinander zu verbinden. Hierzu wird in einem ersten Takt der pulsbreitenmodulierten Ansteuerung die Einschaltzeitdauer des Taktes vollständig an das Ende des Taktes gelegt. In einem darauffolgenden Takt wird die Einschaltzeitdauer vollständig an den Beginn des Taktes gelegt. Somit muss zwischen diesen beiden aufeinanderfolgenden Takten kein zusätzlicher Schaltvorgang stattfinden. Auf diese Weise sind während der beiden Takte in der entsprechenden Phase zumindest zeitweise nur halb so viele Schaltvorgänge erforderlich, wie dies bei einer konventionellen Ansteuerung der Fall wäre. Somit sinken auch die Schaltverluste und damit die damit verbundenen Energie, die in der entsprechenden Phase umgesetzt wird und zu einer Erwärmung des Stromrichters führt. Auf diese Weise kann die Temperaturverteilung der einzelnen Phasen im Stromrichter optimiert werden.

Durch das Verschieben der Ein- und Ausschaltzeitpunkte "verschmelzen" somit in der ersten elektrischen Phase zwei aufeinander folgende Pulse, während in den weiteren elektrischen Phasen alle einzelnen Pulse als getrennte Pulse auftreten. Für einen außenstehenden Beobachter ergibt sich dabei der Eindruck, dass die Phase mit den "verschmolzenen" Pulsen in Vergleich zu den übrigen elektrischen Phasen mit einer reduzierten, insbesondere mit einer halbierten Taktfrequenz betrieben wird.

Der Begriff Takt oder PWM-Takt bezeichnet hierbei die Dauer einer Periode einer konventionellen pulsbreitenmodulierten Ansteuerung. Dies ist die Periodendauer, in der eine konventionelle pulsbreitenmodulierte Ansteuerung jeweils einmal ein- und ausgeschaltet wird. Das erfindungsgemäße Verbinden von zwei aufeinander folgenden Pulsen in der ersten elektrischen Phase kann hierbei als eine virtuelle Verdopplung der Periodendauer und somit einer Halbierung der Schaltfrequenz in der entsprechenden elektrische Phase betrachtet werden. Daher wurde in der vorliegenden Beschreibung der Begriff PWM-Takt gewählt, der sich auf die Periodendauer einer zugrundeliegenden pulsbreitenmodulierten Ansteuerung beziegt. Hierduch sollen Unklarheiten oder eine mögliche Verwechslung mit einer resultierenden (virtuellen) Periodizität vermieden werden.

Durch eine entsprechende Ansteuerung wird sich der Stromrichter weniger stark erwärmen, so dass durch den Stromrichter eine höhere elektrische Leistung bereitgestellt werden kann, ohne dass eine maximal zulässige Betriebstemperatur überschritten wird.

Gemäß der Ausführungsform der vorliegenden Erfindung umfasst das Verfahren einen Schritt zum Erfassen einer Temperaturverteilung in dem Stromrichter. Hierbei wird die Anpassung der Einschaltzeitpunkte und der Ausschaltzeitpunkte in Abhängigkeit von der erfassten Temperaturverteilung ausgeführt. Durch die Berücksichtigung der Temperaturverteilung in dem Stromrichter kann die Anpassung der Einschaltzeitpunkte und der Ausschaltzeitpunkte für eine möglichst homogene Temperaturverteilung in dem Stromrichter angepasst werden.

Gemäß einer Ausführungsform umfasst das Erfassen der Temperatur und/oder der Temperaturverteilung eine sensorische Erfassung mindestens einer Temperatur in dem Stromrichter. Durch einen Temperatursensor kann eine einfache und effiziente Erfassung der Temperatur bzw. der Temperaturverteilung in dem Stromrichter realisiert werden.

Gemäß einer Ausführungsform umfasst das Erfassen der Temperatur und/oder der Temperaturverteilung eine Berechnung einer Temperatur und/oder einer Temperaturverteilung. Durch das Berechnen der Temperatur bzw. der Temperaturverteilung in dem Stromrichter kann eine einfache und kostengünstige Ermittlung der Temperatur bzw. der Temperaturverteilung realisiert werden, ohne dass dies einen größeren Hardware-Aufwand erfordert.

Die obigen Ausgestaltungen und Weiterbildungen lassen sich, soweit sinnvoll, beliebig miteinander kombinieren. Insbesondere wird der Fachmann dabei auch Einzelaspekte als Verbesserungen und Ergänzungen zu den jeweiligen Grundformen der Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
- Figur 1:: eine schematische Darstellung eines elektrischen Antriebssystems mit einem Stromrichter gemäß einer Ausführungsform;
- Figur 2:: eine schematische Darstellung der Ansteuersignale einer konventionellen pulsbreitenmodulierten Ansteuerung eines Stromrichters;
- Figur 3:: eine schematische Darstellung der Ansteuersignale einer pulsbreitenmodulierten Ansteuerung eines Stromrichters gemäß einer nicht beanspruchten Ausführungsform;
- Figur 4:: eine schematische Darstellung der Ansteuersignale einer pulsbreitenmodulierten Ansteuerung eines Stromrichters gemäß einer weiteren nicht beanspruchten Ausführungsform
- Figur 5:: eine schematische Darstellung einer dreiphasigen Wechselspannung wie sie von eine Stromrichter gemäß einer Ausführungsform bereitgestellt werden kann; und
- Figur 6:: eine schematische Darstellung eines Ablaufdiagramms, wie es einem Verfahren zur Ansteuerung eines mehrphasigen Stromrichters gemäß einer Ausführungsform zugrunde liegt.

Figur 1 zeigt eine schematische Darstellung eines elektrischen Antriebssystems mit einem Stromrichter 1 gemäß einer Ausführungsform. Der Stromrichter wird eingangsseitig von einer elektrischen Energiequelle 2 gespeist. Beispielsweise kann es sich bei dieser elektrischen Energiequelle 2 um eine Batterie, insbesondere zum Beispiel um die Traktionsbatterie eines Elektro- oder Hybridfahrzeugs handeln. Ausgangsseitig ist der Stromrichter mit einer elektrischen Maschine 3 elektrisch gekoppelt. Der Stromrichter generiert aus der eingangsseitig bereitgestellten Spannung, hier beispielsweise einer Gleichspannung, eine mehrphasige Wechselspannung und stellt diese ausgangsseitig für die elektrische Maschine 3 bereit. Mit dem hier dargestellten Ausführungsbeispiel sowie der weiteren Beschreibung wird die elektrische Maschine 3 mittels einer dreiphasigen Wechselspannung angesteuert. Die vorliegende Erfindung ist jedoch nicht auf eine dreiphasige Wechselspannung begrenzt. Darüber hinaus kann der Stromrichter 1 auch eine beliebige mehrphasige Wechselspannung insbesondere eine Wechselspannung mit mehr als drei Phasen bereitstellen, um die elektrische Maschine 3 anzusteuern.

Der Stromrichter 1 umfasst in diesem Beispiel drei Halbbrücken 11, 12, 13 mit jeweils einem oberen Schaltelement M1 bis M3 und jeweils einem unteren Schaltelement M4 bis M6. Die Schaltelemente M1 bis M6 des Stromrichters 1 werden dabei von einer Steuervorrichtung 4 mittels geeigneter Steuersignale angesteuert, um aus einer Eingangsspannung die erforderliche mehrphasige Ausgangsspannung zu erzeugen. Hierzu können die einzelnen Schaltelemente M1 bis M6 der Halbbrücken 11 bis 13 beispielsweise von einer Steuereinrichtung 15 der Steuervorrichtung 4 mittels pulsbreitenmodulierten Signalen angesteuert werden. In einem konventionellen Betriebsmodus werden die einzelnen Schaltelemente M1 bis M6 der Halbbrücken 11 bis 13 dabei in der Regel gleichmäßig angesteuert, so dass ausgangsseitig eine dreiphasige Wechselspannung bereitgestellt wird.

Während des Betriebs des Stromrichters 1 werden sich die einzelnen Komponenten, insbesondere die Schaltelemente M1 bis M6 erwärmen. Um die dabei entstehende Wärme abzuführen, kann der Stromrichter 1 beispielsweise über eine Kühlvorrichtung (hier nicht dargestellt) die thermische Energie von den Schaltelementen M1 bis M6 abführen. Hierzu kann beispielsweise als Kühlmedium Luft oder eine Kühlflüssigkeit eingesetzt werden. Während das Kühlmedium an den einzelnen Schaltelementen M1 bis M6 vorbeiströmt, erwärmt sich das Kühlmedium. Strömt das Kühlmedium beispielsweise zunächst an den Schaltelementen M1 und M4 der ersten Halbbrücke 11 vorbei und anschließend an den Schaltelementen M2 und M5 der zweiten Halbbrücke sowie schließlich an den Schaltelementen M3 und M6 der dritten Halbbrücke, so kann dies dazu führen, dass die Schaltelemente M1 und M4 der ersten Halbbrücke 11 stärker gekühlt werden als die weiteren Schaltelemente M2, M3, M5 und M6. Dies kann dazu führen, dass sich die weniger stark gekühlten Schaltelemente, insbesondere die Schaltelemente M3 und M6 der dritten Halbbrücke 13 stärker erwärmen.

Figur 2 zeigt eine schematische Darstellung der Ansteuersignale einer konventionellen pulsbreitenmodulierten Ansteuerung, wie sie beispielsweise einem zuvor beschriebenen Stromrichter zugrunde liegen kann. Für die Ansteuerung der Schaltelemente M1 bis M6 der Halbbrücken 11 bis 13 können die oberen Schaltelemente M1 bis M3 beispielsweise basierend auf dem hier dargestellten Schaltmuster angesteuert werden. Die unteren Schaltelemente M4 bis M6 der Halbbrücken 11 bis 13 können mit entsprechenden komplementären Schaltmustern angesteuert werden. Für eine pulsbreitenmodulierte Ansteuerung der einzelnen Schaltelemente M1 bis M6 kann beispielsweise eine feste Periodendauer T vorgegeben werden. Beispielsweise kann als Raster für die pulsbreitenmodulierte Ansteuerung ein PWM-Takt mit einer Periodendauer T von 100 µs gewählt werden. Aber auch andere Periodendauern sind darüber hinaus möglich. In dem hier dargestellten konventionellen Beispiel werden die Einschaltzeiten für jeden PWM-Takt innerhalb des Zeitrasters T zeitlich mittig zentriert angeordnet. Folglich wird zunächst die Phase W mit der längsten Einschaltdauer eingeschaltet. Anschließend wird die Phase V mit der mittleren Einschaltdauer eingeschaltet und zuletzt die Phase U mit der kürzesten Einschaltdauer eingeschaltet. Entsprechend wird zunächst die Phase U mit der kürzesten Einschaltdauer ausgeschaltet, anschließend die Phase V mit der mittleren Einschaltdauer ausgeschaltet und schließlich die Phase W mit der längsten Einschaltdauer ausgeschaltet. Somit ergeben sich in jedem PWM-Takt für jede Phase ein Einschaltvorgang und ein Ausschaltvorgang, wobei sämtliche Einschaltvorgänge und Ausschaltvorgänge zu unterschiedlichen Zeitpunkten erfolgen. Daher ergeben sich in der Summe sechs Schaltvorgänge zu unterschiedlichen Zeitpunkten, die jeweils mit Schaltverlusten behaftet sind.

Figur 3 zeigt eine schematische Darstellung der Ansteuersignale einer pulsbreitenmodulierten Ansteuerung eines Stromrichters 1 gemäß einer nicht beanspruchten Ausführungsform. Wie hierbei zu erkennen ist, sind die einzelnen Pulse für die entsprechenden Einschaltzeiten in den jeweiligen Phasen gegenüber einer konventionellen Ansteuerung verschoben.

Insbesondere werden dabei in mindestens einer der Phasen in zwei aufeinanderfolgenden PWM-Takten die Einschaltzeiten derart verschoben, dass die Einschaltperioden/Einschaltdauern von zwei aufeinanderfolgenden PWM-Takten miteinander "verschmelzen". Mit anderen Worten, es wird in einem ersten PWM-Takt I die Einschaltperiode vollständig an das Ende des ersten PWM-Taktes I verschoben. In einem sich dem ersten PWM-Takt I anschließenden zweiten PWM-Takt II wird in der gleichen Phase die Einschaltperiode vollständig an den Anfang des zweiten PWM-Taktes II verschoben. Dies führt dazu, dass zwischen dem ersten PWM-Takt I und dem zweiten PWM-Takt II kein Schaltvorgang für ein Ausschalten und ein erneutes Einschalten erforderlich ist. Es muss somit lediglich in dem ersten PWM-Takt I einmal eingeschaltet werden und erst in dem darauffolgenden zweiten PWM-Takt II wieder ausgeschaltet werden. Dies entspricht einer Ansteuerung der entsprechenden Phase mit der Hälfte der Taktfrequenz einer konventionellen Ansteuerung.

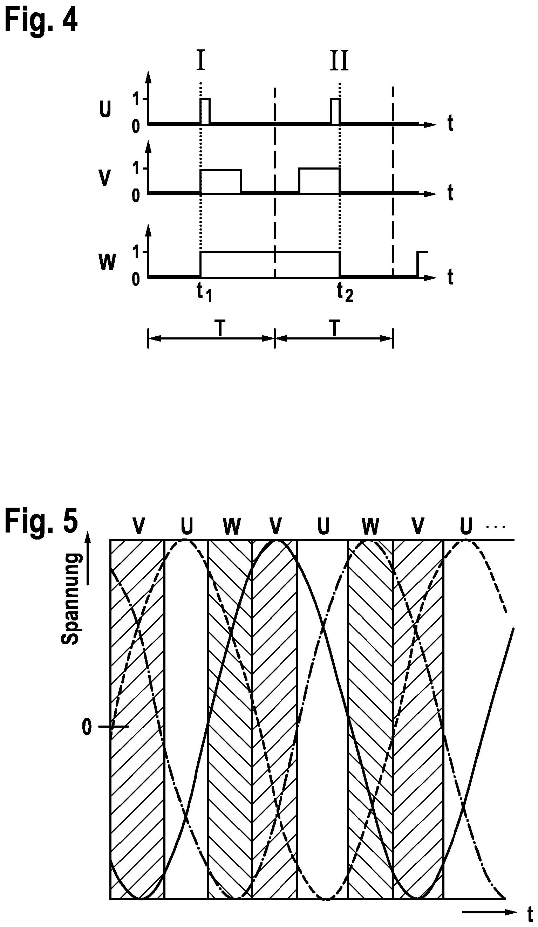

Im Ausführungsbeispiel gemäß Figur 3 sind die Einschaltzeiten und Ausschaltzeiten der Phasen U und V um den gleichen Zeitschritt verschoben wie die der Phase W. Gegebenenfalls kann darüber hinaus auch eine Verschiebung der Einschaltzeiten und/oder der Ausschaltzeiten für die weitere Phasen U und V des Stromrichters 1 erfolgen. Würden auch die weiteren Phasen auf gleiche Weise entsprechend verschoben, so würde dies einer vollständigen Halbierung der Taktfrequenz für die pulsbreitenmodulierte Ansteuerung entsprechen. Darüber hinaus ist es jedoch auch möglich, in den weiteren Phasen U, V des Stromrichters 1 die ursprüngliche Taktfrequenz beizubehalten. Hierbei kann gemäß einer weiteren nicht beanspruchten Ausführungsform wie in Figur 4 dargestellt, für das Einschalten aller Phasen in dem ersten PWM-Takt I ein gemeinsamer Zeitpunkt t1 gewählt werden. Werden, wie hier dargestellt, zunächst alle drei Phasen gemeinsam eingeschaltet, so wird daraufhin zunächst die Phase U mit der kürzesten Einschaltzeit wieder ausgeschaltet. Anschließend wird die Phase V mit der mittleren Einschaltzeit ausgeschaltet. Der Ausschaltzeitpunkt der Phase W mit der längsten Einschaltzeit fällt mit dem Ende des ersten PWM-Takts I zusammen, so dass hier kein Ausschalten erforderlich ist, da in dem zweiten PWM-Takt II, der auf den ersten PWM-Takt I folgt, die Einschaltdauer vollständig an den Beginn des zweiten PWM-Takts II verschoben wurde. Daraufhin wird im weiteren Verlauf die Phase V mit der mittleren Einschaltdauer eingeschaltet und schließlich auch die Phase U mit der kürzesten Einschaltdauert eingeschaltet. Anschließend können zum Zeitpunkt t2 alle drei Phasen gemeinsam ausgeschaltet werden. Nach Beendigung dieses zweiten PWM-Taktes II kann sich erneut ein erster PWM-Takt I anschließen, in dem die Ansteuerung, wie zuvor beschrieben erfolgt.

Das hier dargestellte Beispiel, in welchem die Phase W die Phase mit der längsten Einschaltzeit aufweist, dient lediglich dem besseren Verständnis. Selbstverständlich ist die nicht beanspruchte Ausführungsform entsprechend auch für eine Ansteuerung anwendbar, in welcher eine von der Phase W verschiedene Phase die längste Einschaltzeit aufweist.

Gemäß einer nicht beanspruchten Ausführungsform kann für eine Entlastung aller Phasen jeweils abwechselnd eine Verschiebung der Einschaltzeiten entsprechend dem zuvor beschriebenen Verfahren erfolgen, wobei jeweils die Phase mit der längsten Einschaltdauer in zwei aufeinanderfolgenden PWM-Takten zusammengefügt wird. Hierzu können beispielsweise während einer elektrischen Periode der von dem Stromrichter 1 auszugebenden Wechselspannung jeweils in der Phase aufeinanderfolgende PWM-Takte zusammengefasst werden, in welcher die längste Einschaltzeit eines Schaltelements M1 bis M6 auftritt.

Figur 5 zeigt eine schematische Darstellung einer dreiphasigen Wechselspannung, in der jeweils die Teilbereiche mit der längsten Einschaltzeit durch senkrechte gestrichelte Linien gekennzeichnet sind. In den nicht schraffierten Teilbereichen ist für die Schaltelemente der Phase U mit der längsten Einschaltzeit zu rechnen. Die Teilbereiche, in denen die Phasen V oder W die längste Einschaltzeit aufweisen sind durch entsprechende Schraffuren gekennzeichnet.

Alternativ ist es auch möglich, das Zusammenfassen von aufeinanderfolgenden Einschaltzeiten nur auf Teilbereich der oben beschriebenen Zeitspannen einzusetzen und in den verbleibenden Zeitspannen die Schaltelemente auf konventionelle Art anzusteuern, d.h. die Einschaltzeiten aufeinanderfolgender Takte nicht zusammenzufassen.

Entsprechend der Erfindung wird mittels eines Temperatursensors (17) und/oder einer Modellierung des thermischen Verhaltens des Stromrichters 1 festgestellt, dass sich in dem Stromrichter 1 eine ungleichmäßige Temperaturverteilung einstellt, und wird das zuvor beschriebene Verfahren nur auf diejenige Phase angewendet, in der die höchste Erwärmung festgestellt worden ist. In diesem Fall findet gegebenenfalls in einer oder mehrerer weiteren Phasen eine konventionelle Ansteuerung statt. Auf diese Weise kann eine besonders stark erwärmte Phase weniger stark belastet werden, um gegebenenfalls eine gleichmäßigere Temperaturverteilung in dem Stromrichter 1 herzustellen. Darüber hinaus können auch weitere Kriterien, wie beispielsweise eine berechnete oder sensorisch erfasste Alterung einzelner Schaltelemente M1 bis M6 oder weitere Kriterien mit in die Auswahl des Ansteuerverhaltens der einzelnen Schaltelemente M1 bis M6 einfließen.

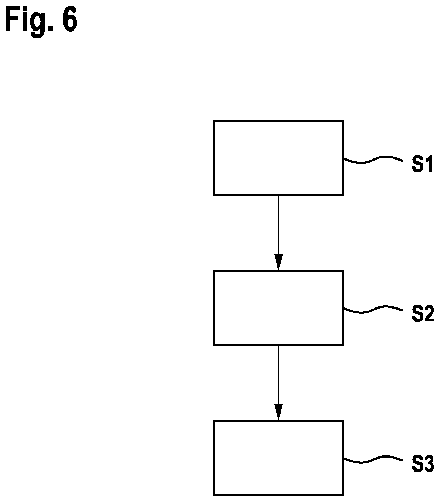

Figur 6 zeigt eine schematische Darstellung, wie sie sowohl einem zuvor beschriebenen beanspruchten oder nicht beanspruchten Verfahren zur Steuerung eines Stromrichters 1 mit mehreren elektrischen Phasen zugrunde liegt. In Schritt S1 werden die Tastverhältnisse für eine pulsbreitenmodulierte Ansteuerung der Phase des Stromrichters 1 in einem zeitlichen Raster ermittelt. Das zeitliche Raster wird durch Einheiten eines PWM-Takts der pulsbreitenmodulierten Ansteuerung gebildet. In den zuvor beschriebenen Figuren 2 bis 4 ist dieses Raster durch die Periodendauer T vorgegeben. Das zeitliche Raster kann beispielsweise 100 µs, oder auch eine beliebige hiervon abweichende Periodendauer aufweisen.

In Schritt S2 werden die Einschaltzeitpunkte und die Ausschaltzeitpunkte für die pulsbreitenmodulierte Ansteuerung mindestens einer ersten Phase angepasst. Insbesondere erfolgt die Anpassung hierbei, wie zuvor beschrieben, derart, dass in mindestens einer elektrischen Phase in zwei aufeinanderfolgenden PWM-Takten die Einschaltzeiten miteinander verschmelzen. Neben den hier beschriebenen Maßnahmen zur Kombination der Einschaltdauern in zwei aufeinanderfolgenden PWM-Takten sind darüber hinaus ergänzend gegebenenfalls auch weitere Maßnahmen zur Entlastung einzelner Schaltelemente oder einzelner Halbbrücken in dem Stromrichter 1 möglich. Insbesondere ist es auch möglich, gegebenenfalls die Taktraten für die pulsbreitenmodulierte Ansteuerung anzupassen oder weitere Maßnahmen zur Entlastung einzelner Schaltelemente oder Halbbrücken vorzunehmen.

## Patentansprüche

1. Verfahren zur Steuerung eines Stromrichters (1) mit mehreren elektrischen Phasen, mit den Schritten:
Ermitteln (S1) von Tastverhältnissen für Einschaltdauern von Pulsen für eine pulsbreitenmodulierte Ansteuerung der elektrischen Phasen des Stromrichters (1) in einem zeitlichen Raster, wobei das zeitliche Raster durch Einheiten eines PWM-Takts (I, II) der pulsbreitenmodulierten Ansteuerung gebildet wird; und
Anpassen (S2) der Einschaltzeitpunkte und Ausschaltzeitpunkte für die pulsbreitenmodulierten Ansteuerung einer ersten elektrischen Phase, wobei für die erste Phase in einem ersten PWM-Takt (I) eine Einschaltdauer vollständig am Ende des ersten PWM-Takts (I) eingestellt wird und in einem zweiten PWM-Takt (II) , der dem ersten PWM-Takt (I) folgt, die Einschaltdauer der ersten Phase zu Beginn des zweiten PWM-Takts (II) eingestellt wird, und wobei die Tastverhältnisse der elektrischen Phasen den ermittelten Tastverhältnissen entsprechen, **gekennzeichnet, durch** einen Schritt zum Erfassen einer Temperaturverteilung in dem Stromrichter (1);
wobei der Schritt (S2) zum Anpassen der Einschaltzeitpunkte und der Ausschaltzeitpunkte in Abhängigkeit von der erfassten Temperaturverteilung ausgeführt wird,
wobei die erste elektrische Phase des Stromrichters (1) diejenige Phase umfasst, in der eine höchste Erwärmung festgestellt worden ist,
wobei für eine oder mehrere weitere Phasen eine konventionelle Ansteuerung stattfindet, und
wobei bei einer konventionellen Ansteuerung jeweils einmal in einem PWM-Takt ein- und ausgeschaltet wird.

2. Verfahren nach Anspruch 1, mit einem Schritt zum Erfassen einer Temperatur in dem Stromrichter (1); wobei der Schritt (S2) zum Anpassen der Einschaltzeitpunkte und der Ausschaltzeitpunkte in Abhängigkeit von der erfassten Temperatur ausgeführt wird.

3. Verfahren nach Anspruch 2, wobei das Erfassen der Temperatur und/oder der Temperaturverteilung eine sensorische Erfassung mindestens einer Temperatur in dem Stromrichter (1) umfasst.

4. Verfahren nach Anspruch 2 oder 3, wobei das Erfassen der Temperatur und/oder der Temperaturverteilung eine Berechnung einer Temperatur und/oder einer Temperaturverteilung umfasst.

5. Verfahren nach einem der Ansprüche 1 bis 4, mit einem Schritt (S3) zum Ansteuern des Stromrichters (1) in Abhängigkeit von den angepassten Einschaltzeitpunkten und Ausschaltzeitpunkten für die pulsbreitenmodulierte Ansteuerung der elektrischen Phasen des Stromrichters (1).

6. Steuervorrichtung (4) für einen pulsbreitenmodulierten Stromrichter (1) mit mehreren elektrischen Phasen, mit:
einer Steuereinrichtung, die dazu ausgelegt ist, Tastverhältnisse für Einschaltdauern von Pulsen einer pulsbreitenmodulierten Ansteuerung der elektrischen Phasen des Stromrichters (1) in einem zeitlichen Raster zu ermitteln, wobei das zeitliche Raster durch Einheiten eines PWM-Takts (I, II) der pulsbreitenmodulierten Ansteuerung gebildet wird, und die Steuereinrichtung dazu ausgelegt ist, Einschaltzeitpunkte und Ausschaltzeitpunkte für die pulsbreitenmodulierten Ansteuerung einer ersten elektrischen Phase einzustellen, wobei für die erste elektrische Phase in einem ersten PWM-Takt (I) die Einschaltdauer vollständig am Ende des ersten PWM-Takts eingestellt wird und in einem zweiten PWM-Takt (II), der dem ersten PWM-Takt (I) folgt, die Einschaltdauer der ersten elektrischen Phase zu Beginn des zweiten PWM-Takts (I) eingestellt wird, und wobei die Tastverhältnisse der elektrischen Phasen den ermittelten Tastverhältnissen entsprechen,
**dadurch gekennzeichnet, dass**
die Steuereinrichtung dazu ausgelegt ist, eine Temperaturverteilung in dem Stromrichter (1) zu erfassen; und die Einschaltzeitpunkte und die Ausschaltzeitpunkte in Abhängigkeit von der erfassten Temperaturverteilung anzupassen,
wobei die erste elektrische Phase des Stromrichters (1) diejenige Phase umfasst, in der eine höchste Erwärmung festgestellt worden ist,
wobei für eine oder mehrere weitere Phasen eine konventionelle Ansteuerung stattfindet, und
wobei bei einer konventionellen Ansteuerung jeweils einmal in einem PWM-Takt ein- und ausgeschaltet wird.

7. Elektrischer Stromrichter (1), mit: mehreren Halbbrücken (11, 12, 13), die jeweils ein erstes Schaltelement (M1, M2, M3) und ein zweites Schaltelement (M4, M5, M6) umfassen; und einer Steuervorrichtung (4) nach Anspruch 6, wobei die Steuervorrichtung (4) dazu ausgelegt ist, die ersten Schaltelemente (M1, M2, M3) und die zweiten Schaltelemente (M4, M5, M6) der Halbbrücken (11, 12, 13) in Abhängigkeit von den eingestellten Einschaltzeitpunkten und den eingestellten Ausschaltzeitpunkten anzusteuern.

## Claims

1. Method for controlling a converter (1) having a plurality of electrical phases, comprising the following steps:
determining (S1) duty ratios for switched-on durations of pulses for pulse-width-modulated control of the electrical phases of the converter (1) in a time frame, wherein the time frame is formed by units of a PWM clock cycle (I, II) of the pulse-width-modulated control; and
adapting (S2) the switching-on points in time and switching-off points in time for the pulse-width-modulated control of a first electrical phase, wherein for the first phase in a first PWM clock cycle (I) a switched-on duration is set completely at the end of the first PWM clock cycle (I) and, in a second PWM clock cycle (II) following the first PWM clock cycle (I), the switched-on duration of the first phase is set at the beginning of the second PWM clock cycle (II), and wherein the duty ratios of the electrical phases correspond to the duty ratios determined,
**characterized by**
a step for detecting a temperature distribution in the converter (1);
wherein the step (S2) for adapting the switching-on points in time and the switching-off points in time is carried out depending on the detected temperature distribution,
wherein the first electrical phase of the converter (1) comprises the phase in which the highest heating has been ascertained,
wherein conventional control takes place for one or more further phases, and
wherein, in the case of conventional control, switching on and switching off are each carried out once in a PWM clock cycle.

2. Method according to Claim 1, comprising a step for detecting a temperature in the converter (1); wherein the step (S2) for adapting the switching-on points in time and the switching-off points in time is carried out depending on the detected temperature.

3. Method according to Claim 2, wherein detecting the temperature and/or the temperature distribution comprises a sensor-based detection of at least one temperature in the converter (1).

4. Method according to Claim 2 or 3, wherein detecting the temperature and/or the temperature distribution comprises a calculation of a temperature and/or a temperature distribution.

5. Method according to any of Claims 1 to 4, comprising a step (S3) for controlling the converter (1) depending on the adapted switching-on points in time and switching-off points in time for the pulse-width-modulated control of the electrical phases of the converter (1).

6. Control device (4) for a pulse-width-modulated converter (1) having a plurality of electrical phases, comprising:
a control unit designed to determine duty ratios for switched-on durations of pulses of pulse-width-modulated control of the electrical phases of the converter (1) in a time frame, wherein the time frame is formed by units of a PWM clock cycle (I, II) of the pulse-width-modulated control, and the control unit is designed to set switching-on points in time and switching-off points in time for the pulse-width-modulated control of a first electrical phase, wherein for the first electrical phase in a first PWM clock cycle (I) the switched-on duration is set completely at the end of the first PWM clock cycle and, in a second PWM clock cycle (II) following the first PWM clock cycle (I), the switched-on duration of the first electrical phase is set at the beginning of the second PWM clock cycle (I), and wherein the duty ratios of the electrical phases correspond to the duty ratios determined,
**characterized in that**
the control unit is designed
to detect a temperature distribution in the converter (1);
and to adapt the switching-on points in time and the switching-off points in time depending on the detected temperature distribution,
wherein the first electrical phase of the converter (1) comprises the phase in which the highest heating has been ascertained,
wherein conventional control takes place for one or more further phases, and
wherein, in the case of conventional control, switching on and switching off are each carried out once in a PWM clock cycle.

7. Electrical converter (1), comprising:
a plurality of half-bridges (11, 12, 13) each comprising a first switching element (M1, M2, M3) and a second switching element (M4, M5, M6); and
a control device (4) according to Claim 6,
wherein the control device (4) is designed to control the first switching elements (M1, M2, M3) and the second switching elements (M4, M5, M6) of the half-bridges (11, 12, 13) depending on the set switching-on points in time and the set switching-off points in time.

## Revendications

1. Procédé de commande d'un convertisseur de courant (1) à plusieurs phases électriques, comprenant les étapes consistant à :
déterminer (S1) des facteurs d'utilisation pour les cycles d'utilisation des impulsions pour un pilotage modulé en largeur d'impulsion des phases électriques du convertisseur de courant (1) dans une grille temporelle, la grille temporelle étant formée par des unités d'un cycle PWM (I, II) du pilotage modulé en largeur d'impulsion ; et
adapter (S2) les temps de mise en circuit et les temps de mise hors circuit pour le pilotage modulé en largeur d'impulsion d'une première phase électrique, dans lequel, dans un premier cycle PWM (I) un cycle d'utilisation est réglé entièrement à la fin du premier cycle PWM (I) pour la première phase, et dans un deuxième cycle PWM (II) consécutif au premier cycle PWM (I), le cycle d'utilisation de la première phase est réglé au début du deuxième cycle PWM (II), et les facteurs d'utilisation des phases électriques correspondent aux facteurs d'utilisation déterminés,
**caractérisé par** une étape de détection d'une distribution de température dans le convertisseur de courant (1) ;
l'étape (S2) d'adaptation des temps de mise en circuit et des temps de mise hors circuit étant effectuée en fonction de la distribution de température détectée,
la première phase électrique du convertisseur de courant (1) comprenant la phase dans laquelle un réchauffement maximal a été constaté,
un pilotage conventionnel ayant lieu pour une ou plusieurs autres phases, et
dans lequel, pour un pilotage conventionnel, une mise en et hors circuit est effectuée respectivement une fois dans un cycle PWM.

2. Procédé selon la revendication 1, comprenant une étape de détection d'une température dans le convertisseur de courant (1) ;
l'étape (S2) d'adaptation des temps de mise en circuit et des temps de mise hors circuit étant effectuée en fonction de la température détectée.

3. Procédé selon la revendication 2, dans lequel la détection de la température et/ou de la distribution de température comprend au moins une température dans le convertisseur de courant (1).

4. Procédé selon la revendication 2 ou 3, dans lequel la détection de la température et/ou de la distribution de température comprend un calcul d'une température et/ou d'une distribution de température.

5. Procédé selon l'une quelconque des revendications 1 à 4, comprenant une étape (S3) de pilotage du convertisseur de courant (1) en fonction des temps de mise en circuit et des temps de mise hors circuit adaptés pour le pilotage modulé en largeur d'impulsion des phases électriques du convertisseur de courant (1).

6. Dispositif de commande (4) pour un convertisseur de courant (1) modulé en largeur d'impulsion, à plusieurs phases électriques, comprenant :
un équipement de commande qui est conçu pour déterminer des facteurs d'utilisation pour des cycles d'utilisation des impulsions d'un pilotage modulé en largeur d'impulsion des phases électriques du convertisseur de courant (1) dans une grille temporelle, la grille temporelle étant formée par des unités d'un cycle PWM (I, II) du pilotage modulé en largeur d'impulsion, et l'équipement de commande étant conçu pour régler des temps de mise en circuit et des temps de mise hors circuit pour le pilotage modulé en largeur d'impulsion d'une première phase électrique, dans lequel, dans un premier cycle PWM (I), le cycle d'utilisation est réglé entièrement à la fin du premier cycle PWM pour la première phase électrique, et dans un deuxième cycle PWM (II) consécutif au premier cycle PWM (I), le cycle d'utilisation de la première phase électrique est réglé au début du deuxième cycle PWM (I), et les facteurs d'utilisation des phases électriques correspondent aux facteurs d'utilisation déterminés,
**caractérisé en ce que** l'équipement de commande est conçu pour
détecter une distribution de température dans le convertisseur de courant (1) ; et
adapter les temps de mise en circuit et les temps de mise hors circuit en fonction de la distribution de température détectée,
la première phase électrique du convertisseur de courant (1) comprenant la phase dans laquelle un réchauffement maximal a été constaté,
dans lequel, pour une ou plusieurs autres phases, un pilotage conventionnel a lieu, et
dans lequel, pour un pilotage conventionnel, une mise en et hors circuit est effectuée respectivement une fois dans un cycle PWM.

7. Convertisseur de courant électrique (1), comprenant :
plusieurs demi-ponts (11, 12, 13) qui comprennent respectivement un premier élément de commutation (M1, M2, M3) et un deuxième élément de commutation (M4, M5, M6) ; et
un dispositif de commande (4) selon la revendication 6,
le dispositif de commande (4) étant conçu pour piloter les premiers éléments de commutation (M1, M2, M3) et les deuxièmes éléments de commutation (M4, M5, M6) des demi-ponts (11, 12, 13) en fonction des temps de mise en circuit réglés et des temps de mise hors circuit réglés.
